# EUROPÄISCHE PATENTSCHRIFT

(11) **EP 3 625 496 B1**
(45) Veröffentlichungstag und Bekanntmachung des Hinweises auf die Patenterteilung: **14.12.2022**
(21) Anmeldenummer: 19720501.6
(22) Anmeldetag: 18.04.2019
(51) Int. Cl.: F17C 1/00

(54) **FAHRZEUG MIT EINER SPEICHERANORDNUNG ZUM SPEICHERN UND ABGEBEN EINES DRUCKGASES UND SPEICHERANORDNUNG FÜR EIN FAHRZEUG**
VEHICLE HAVING A STORAGE ASSEMBLY FOR STORING AND DISPENSING A PRESSURISED GAS, AND STORAGE ASSEMBLY FOR A VEHICLE
VÉHICULE MUNI D'UN SYSTÈME DE STOCKAGE SERVANT À STOCKER ET FOURNIR UN GAZ SOUS PRESSION ET SYSTÈME DE STOCKAGE POUR VÉHICULE

(30) Priorität: 19.04.2018 DE 102018205967
(43) Veröffentlichungstag der Anmeldung: 25.03.2020
(73) Patentinhaber: AUDI AG, 85045 Ingolstadt (DE)
(72) Erfinder: ALBL, Sebastian, 85080 Gaimersheim (DE); HOFMANN, Franz, 85051 Ingolstadt (DE); HOCHGRAEBER, Felix, 91564 Neuendettelsau (DE); SCHÜTZ, Thorsten, 85053 Ingolstadt (DE)
(86) Internationale Anmeldenummer: PCT/EP2019/060038
(87) Internationale Veröffentlichungsnummer: WO 2019/202058

(56) Entgegenhaltungen:
- US-A1- 2014 305 951
- US-A1- 2016 348 838
- US-A1- 2017 030 300
- US-A1- 2017 291 328
- US-A1- 2017 327 237

## Beschreibung

Die Erfindung betrifft eine Speicheranordnung für ein Fahrzeug zum Speichern und Abgeben eines Druckgases gemäß dem Oberbegriff des Patentanspruchs 1. Die Erfindung betrifft ferner ein Fahrzeug mit einer Speicheranordnung zum Speichern und Abgeben eines Druckgases gemäß des Oberbegriffs des Patentanspruchs 8.

Anordnungen zum Speichern von Gas unter hohem Druck sind aus dem allgemeinen Stand der Technik bekannt und dienen bspw. zum Speichern von Erdgas oder Wasserstoff. Solche Speicher haben einen vergleichsweise großen Durchmesser im Verhältnis zu ihrer Länge und sind deshalb wegen der damit verbundenen Bauhöhe hinsichtlich der Integration in eine Fahrzeugstruktur kritisch zu bewerten.

Daher werden mehrere sogenannte Rohrspeicher, die flaschenförmig mit einem kleinen Durchmesser im Verhältnis zur Länge ausgeführt sind, zu einem modularen Druckbehälter zusammengefasst, wie dies bspw. aus der US 4,932,403 B oder der US 7,137,409 B2 bekannt ist. Solche Druckbehälter ermöglichen bei einer Integration in ein Fahrzeug, bspw. in einen Unterboden oder Kofferraum keine Querlastpfade ohne denselben zu unterbrechen und ohne zusätzliche Anschlusselemente, Ventil- und Schutzeinrichtungen einsetzen zu müssen.

Eine gattungsbildende Speicheranordnung für ein Fahrzeug zum Speichern und Abgeben eines Druckgases ist aus der US 2017/291328 A1 bekannt.

Diese Speicheranordnung besteht aus mehreren übereinander angeordneten Rohrspeicher, wobei die nebeneinander angeordneten Rohrspeicher einer Lage an deren axialen Enden mittels Rohrspeicherschleifen fluidverbunden sind. Die am Rand zweier übereinander angeordneten Lagen benachbarten Rohrspeicher werden ebenso mittels solchen Rohrspeicherschleifen fluidverbunden. Um diese gestapelten Rohrspeicher zusammenzuhalten, werden quer zur Längsrichtung der Rohrspeicher verlaufende Montagewände mit an den Querschnitt der Rohrspeicher angepassten Montageöffnungen verwendet, wobei die Rohrspeicher in diese Montageöffnungen eingeführt und fixiert werden. Es wird auch vorgeschlagen, solche Montagewände jeweils im Bereich der Rohrspeicherschleifen einzusetzen, so dass die Rohrspeicherschleifen schleifenförmig durch zwei Montageöffnungen geführt werden. Solche Montagewände sind entlang der Montageöffnungen einer Lage geschlitzt ausgeführt, so dass mittels an den Stirnseiten verlaufenden Spannbändern diese Montagewände zusammengepresst und gleichzeitig eine Verbindung mit der Karosserie eines Fahrzeugs hergestellt wird.

Bei Fahrzeugen, die speziell für einen Elektroantrieb konfiguriert sind, befindet sich unterhalb des Fahrgastzellenbodens ein Technikraum für Traktionsbatterien des Elektroantriebs. Ein solches Fahrzeug ist bspw. aus der DE 10 2011 012 496 A1 oder der US 2011/0300426 A1 bekannt, bei welchem der unterhalb des Fahrgastzellenbodens vorgesehene Technikraum in zwei Teiltechnikräume separiert ist, wobei zusätzlich jeweils unter den Vordersitzen und unter einer Rücksitzbank jeweils ein Quertunnel zur weiteren Unterbringung von Traktionsbatterien vorgesehen ist, so dass zwischen den beiden Quertunneln in Fahrzeuglängsrichtung ein Fußraum entsteht.

Auch die US 9,033,085 B1 beschreibt ein Fahrzeug, bei welchem unterhalb des Fahrgastzellenbodens ein Batteriemodul angeordnet ist. Dieses Batteriemodul ist im Bereich des Fußraums zwischen den Vordersitzen und einer Rücksitzbank des Fahrzeugs in Fahrzeughochrichtung ausgespart, so dass eine sogenannte Fußgarage zum Abstellen der Füße von auf der Rücksitzbank sich befindenden Fondpassagiere entsteht.

Der Erfindung liegt die Aufgabe zugrunde, eine Speicheranordnung aus mehreren Rohrspeichern zum Speichern und Abgeben eines Druckgases zu schaffen, die in die Karosseriestruktur des Fahrzeugs mit hoher Crashsicherheit integrierbar ist. Ferner ist es Aufgabe der Erfindung ein Fahrzeug mit einer Speicheranordnung aus mehreren Rohrspeichern zum Speichern und Abgeben eines Druckgases anzugeben, die in die Karosseriestruktur eines Fahrzeugs mit dem Ziel einer erhöhten Crashsicherheit integriert ist.

Die erstgenannte Aufgabe wird gelöst durch eine Speicheranordnung mit den Merkmalen des Patentanspruches 1.

Eine solche Speicheranordnung für ein Fahrzeug zum Speichern und Abgeben eines Druckgases umfasst:
- einen ersten Rohrspeicherabschnitt mit mehreren in einer ersten Lage und wenigstens in einer zweiten Lage längsparallel zueinander angeordneten Rohrspeicher, die an deren axialen Enden mittels Rohrspeicherschleifen mäanderförmig fluidverbunden sind,
- wenigstens einen zweiten Rohrspeicherabschnitt mit mehreren in einer ersten Lage und wenigstens in einer zweiten Lage längsparallel zueinander angeordneten Rohrspeicher, die an deren axialen Enden mittels Rohrspeicherschleifen mäanderförmig fluidverbunden sind, und
- einem Fluidverbindungsmittel zum Fluidverbinden des ersten und zweiten Rohrspeicherabschnittes.

Erfindungsgemäß ist vorgesehen, dass
- das Fluidverbindungsmittel die jeweils gleichen axialen Enden von zwei entweder in der ersten Lage auf einer Ebene benachbarten Rohrspeicher oder in der zweiten Lage auf einer Ebene benachbarten Rohrspeicher fluidverbindet, und
- ein Zwischenraum zwischen dem ersten und zweiten Rohrspeicherabschnitt zur Aufnahme eines Querträgers der Karosserie des Fahrzeugs, welcher entweder mit der zweite Lage der Rohrspeicher fluchtet, wenn das Fluidverbindungsmittel mit der ersten Lage der Rohrspeicher fluchtet, oder mit der ersten Lage der Rohrspeicher fluchtet, wenn das Fluidverbindungsmittel mit der zweiten Lage der Rohrspeicher fluchtet.

Bei einer solchen Speicheranordnung mit mindestens zwei beabstandeten Rohrspeicherabschnitte werden diese derart miteinander fluidverbunden, dass in dem Zwischenraum zwischen den beiden Rohrspeicherabschnitten ein Querträger hindurchgeführt werden kann, ohne dass dieser für das die beiden Rohrspeicherabschnitte verbindende vorzugsweise als Verbindungsrohr ausgebildete Fluidverbindungsmittel freigeschnitten werden muss, da dieser mit derjenigen Lage der Rohrspeicher fluchtet bzw. eine gemeinsame Ebene bildet, in welcher das Fluidverbindungsmittel nicht verläuft.

Weiterbildungsgemäß weist die Speicheranordnung einen den ersten Rohrspeicherabschnitt und den zweiten Rohrspeicherabschnitt umrahmenden Rahmenträger auf.

Mit einem solchen Rahmenträger und den mindestens zwei Rohrspeicherabschnitten wird eine eigenständige herstellbar Baugruppe geschaffen. Vorzugsweise wird die mechanische Verbindung zwischen den beiden Rohrspeicherabschnitten und dem Rahmenträger dadurch hergestellt, dass zwischen dem ersten und zweiten Rohrspeicherabschnitt ein Quersteg angeordnet ist, welcher mit derjenigen ersten oder zweiten Lage der Rohrspeicher fluchtet, mit der auch das vorzugsweise als Verbindungsrohr ausgebildete Fluidverbindungsmittel fluchtet, wobei das Verbindungsrohr als Fluidverbindungsmittel durch den Quersteg geführt ist. Der Quersteg ist endseitig mit dem Rahmenträger kraftschlüssig verbunden.

Die Steifigkeit einer solchen Baugruppe kann weiter verbessert werden, wenn weiterbildungsgemäß die Speicheranordnung wenigstens einen stangenförmigen Befestigungsträger aufweist, welcher durch die Öffnungen der jeweils an einem gleichen axialen Ende der Rohrspeicher liegenden Rohrspeicherschleifen geführt und mit dem Rahmenträger kraftschlüssig verbunden ist. Es ist natürlich auch möglich auf der gegenüberliegenden Seite einen weiteren Befestigungsträger durch die Rohrspeicherschleifen zu führen.

Weiterhin ist nach einer bevorzugten Weiterbildung der Erfindung in dem Zwischenraum zwischen dem ersten und zweiten Rohrspeicherabschnitt ein Rohrspeicherzwischenabschnitt mit mehreren längsparallel in wenigstens der ersten Lage angeordneten Rohrspeicher vorgesehen, die an deren axialen Enden mittels Rohrspeicherschleifen mäanderförmig fluidverbunden sind. Hierbei ist die Anzahl der Lagen der Rohrspeicher des Rohrspeicherzwischenabschnittes um wenigstens eine Lage gegenüber der Anzahl der Lagen der Rohrspeicher des ersten und/oder zweiten Rohrspeicherabschnittes kleiner, wobei das in der ersten Lage der Rohrspeicher verlaufende Fluidverbindungsmittel aus einem die benachbarten Rohrspeicher des ersten Rohrspeicherabschnittes und des Rohrspeicherzwischenabschnittes fluidverbindenden ersten Verbindungsrohrabschnitt und einem die benachbarten Rohrspeicher des zweiten Rohrspeicherabschnittes und des Rohrspeicherzwischenabschnittes fluidverbindenden zweiten Verbindungsrohrabschnitt besteht.

Dadurch dass der Rohrspeicherzwischenabschnitt zwischen dem ersten und zweiten Rohrspeicherabschnitt mit weniger Lagen von Rohrspeichern als die benachbarten Rohrspeicherabschnitte ausgebildet ist, bildet dieser Rohrspeicherabschnitt eine Fußgarage für die Ablage der Füße von Fondpassagieren.

Besonders vorteilhaft ist es hierbei, wenn die Rohrspeicher des Rohrspeicherzwischenabschnittes in deren Längsrichtung gegenüber den Rohrspeichern des ersten und/oder zweiten Rohrspeicherabschnittes verkürzt sind, wodurch in demjenigen Bereich des Zwischenraums zwischen den benachbarten Rohrspeicherabschnitten ohne Rohrspeicher eine in Fahrzeughochrichtung eines Fahrzeugs gesehen tiefere Fußgarage entsteht.

Die erfindungsgemäße Speicheranordnung kann auch mit mehr als zwei Rohrspeicherabschnitten aufgebaut werden, wobei zwischen jeweils zwei Rohrspeicherabschnitte Freiräume bestehen, die Querträger und/oder Querstege der oben beschriebenen Art aufnehmen.

Ferner ist es möglich, die Rohrspeicherabschnitte nicht nur aus zwei Lagen sondern auch aus drei oder mehr Lagen aufzubauen.

Die Rohrspeicher der benachbarten Lagen liegen derart bauraumsparend aufeinander, dass benachbarte Rohrspeicher aus benachbarten Lagen bezüglich deren Längsachse um 60° versetzt sind, d. h. der kreisförmige Umfang eines Rohrspeicher liegt tangential an den kreisförmigen Umfängen der in der benachbarten Lage liegenden Rohrspeicher. Es ist natürlich auch möglich, die Rohrspeicher in anderer Weise aufeinander zu lagern.

Die zweitgenannte Aufgabe wird gelöst durch ein Fahrzeug mit den Merkmalen des Patentanspruchs 8
Ein solches Fahrzeug umfasst
   - eine erfindungsgemäße Speicheranordnung zum Speichern und Abgeben eines Druckgases mit folgende Komponenten:
      - einen ersten Rohrspeicherabschnitt mit mehreren in einer ersten Lage und wenigstens in einer zweiten Lage längsparallel zueinander angeordneten Rohrspeicher, die an deren axialen Enden mittels Rohrspeicherschleifen mäanderförmig fluidverbunden sind,
      - wenigstens einen zweiten Rohrspeicherabschnitt mit mehreren in einer ersten Lage und wenigstens in einer zweiten Lage längsparallel zueinander angeordneten Rohrspeicher, die an deren axialen Enden mittels Rohrspeicherschleifen mäanderförmig fluidverbunden sind, und
      - ein Fluidverbindungsmittel zum Fluidverbinden des ersten und zweiten Rohrspeicherabschnittes, und
   - einen mit der Karosserie des Fahrzeugs kraftschlüssig verbundener Querträger.
Erfindungsgemäß ist vorgesehen, dass
   - das Fluidverbindungsmittel die jeweils gleichen axialen Enden von zwei entweder in der ersten Lage benachbarten Rohrspeicher oder in der zweiten Lage benachbarten Rohrspeicher fluidverbindet, und
   - der Querträger in einem Zwischenraum zwischen dem ersten und zweiten Rohrspeicherabschnitt entweder fluchtend mit der zweite Lage der Rohrspeicher, wenn das Verbindungsrohr mit der ersten Lage der Rohrspeicher fluchtet, oder fluchtend mit der ersten Lage der Rohrspeicher, wenn das Verbindungsrohr mit der zweiten Lage der Rohrspeicher fluchtet, angeordnet ist.

Bei diesem Fahrzeug mit integrierter Speicheranordnung wird eine über die Karosseriestruktur ermöglichte Querabstützung realisiert, ohne dass die Speicheranordnung aus mehreren Rohrspeicher so unterbrochen werden muss, dass kein durchgehendes Speichervolumen entsteht. Hierzu werden mindestens zwei beabstandete Rohrspeicherabschnitte derart miteinander fluidverbunden, dass in dem Zwischenraum zwischen den beiden Rohrspeicherabschnitten ein Querträger hindurchgeführt werden kann, ohne dass dieser für das die beiden Rohrspeicherabschnitte verbindende vorzugsweise als Verbindungsrohr ausgebildeten Fluidverbindungsmittel freigeschnitten werden muss, da dieses mit derjenigen Lage der Rohrspeicher fluchtet bzw. eine gemeinsame Ebene bildet, in welcher das Fluidverbindungsmittel nicht verläuft.

Nach einer bevorzugten Weiterbildung der Erfindung umfasst die Speicheranordnung einen zwischen dem ersten und zweiten Rohrspeicherabschnitt angeordneten Quersteg, welcher mit derjenigen ersten oder zweiten Lage fluchtet, mit der auch das vorzugsweise als Verbindungsrohr ausgebildete Fluidverbindungsmittel fluchtet, wobei das den ersten mit dem zweiten Rohrspeicherabschnitt fluidverbindende Fluidverbindungsmittel durch den Quersteg geführt ist. Damit ist dieser Quersteg zwischen den beiden Rohrspeicherabschnitte so angeordnet, dass dieser für das Fluidverbindungsmittel an einem Endbereich des Querstegs freigeschnitten ist. Vorzugsweise wird die Speicheranordnung aus dem ersten und zweiten Rohrspeicherabschnitt von einem Rahmenträger umrahmt, so dass der Quersteg endseitig mit dem Rahmenträger kraftschlüssig verbindbar ist. Damit kann eine solche Speicheranordnung aus den beiden Rohrspeicherabschnitten und dem Rahmenträger als eigene Baugruppe hergestellt werden, die als solche mittels des Rahmenträgers mit der Struktur der Karosserie des Fahrzeugs kraftschlüssig verbindbar ist. Eine solche Baugruppe erhöht auch die Steifigkeit der Fahrzeugkarosserie.

Eine verbesserte mechanische Anbindung der beiden Rohrspeicherabschnitte an den Rahmenträger wird dadurch erzielt, dass wenigstens ein stangenförmiger Befestigungsträger durch die Öffnungen der an einem gleichen axialen Ende der Rohrspeicher liegenden Rohrspeicherschleifen geführt ist. Ein solcher Befestigungsträger ist mit dem Rahmenträger endseitig kraftschlüssig verbindbar. Mittels Befestigungslaschen können die Rohrspeicherschleifen mit dem Rahmenträger verbunden werden, um die Steifigkeit der Struktur aus den beiden Rohrspeicherabschnitte und dem Rahmenträger zu erhöhen.

Eine weitere Baugruppe mit den beiden Rohrspeicherabschnitten ist weiterbildungsgemäß dadurch realisierbar, dass der Querträger zusammen mit Trägerelementen einen zum Rahmenträger kongruenten Befestigungsrahmen bildet, wobei die von dem Querträger und dem Trägerelement gebildete Zwischenräume mittels Deckelelementen und/oder die von den Rahmenelementen und dem Quersteg des Rahmenträgers gebildeten Zwischenräume mittels Deckelelementen verschlossen sind und der Befestigungsrahmen mit dem Rahmenträger kraftschlüssig verbunden ist oder einstückig hergestellt ist. Eine solche Baugruppe kann direkt bspw. an den Unterboden der Fahrzeugkarosserie montiert werden.

Weiterhin ist nach einer bevorzugten Weiterbildung der Erfindung in dem Zwischenraum zwischen dem ersten und zweiten Rohrspeicherabschnitt ein Rohrspeicherzwischenabschnitt mit mehreren längsparallel in wenigstens der ersten Lage angeordneten Rohrspeicher vorgesehen, die an deren axialen Enden mittels Rohrspeicherschleifen mäanderförmig fluidverbunden sind. Hierbei ist die Anzahl der Lagen der Rohrspeicher des Rohrspeicherzwischenabschnittes um wenigstens eine Lage gegenüber der Anzahl der Lagen der Rohrspeicher des ersten und/oder zweiten Rohrspeicherabschnittes kleiner, wobei das in der ersten Lage der Rohrspeicher verlaufende Fluidverbindungsmittel aus einem die benachbarten Rohrspeicher des ersten Rohrspeicherabschnittes und des Rohrspeicherzwischenabschnittes fluidverbindenden ersten Verbindungsrohrabschnitt und einem die benachbarten Rohrspeicher des zweiten Rohrspeicherabschnittes und des Rohrspeicherzwischenabschnittes fluidverbindenden zweiten Verbindungsrohrabschnitt besteht.

Dadurch dass der Rohrspeicherzwischenabschnitt zwischen dem ersten und zweiten Rohrspeicherabschnitt mit weniger Lagen von Rohrspeichern als die benachbarten Rohrspeicherabschnitte ausgebildet ist, bildet dieser Rohrspeicherabschnitt eine Fußgarage für die Ablage der Füße von Fondpassagieren.

Besonders vorteilhaft ist es hierbei, wenn die Rohrspeicher des Rohrspeicherzwischenabschnittes in deren Längsrichtung gegenüber den Rohrspeichern des ersten und/oder zweiten Rohrspeicherabschnittes verkürzt ist, wodurch in demjenigen Bereich des Zwischenraums zwischen den benachbarten Rohrspeicherabschnitten ohne Rohrspeicher eine in Fahrzeughochrichtung gesehen weitere, jedoch tiefere Fußgarage entsteht.

Die Rohrspeicher können mit der Längsrichtung in Fahrzeugquerrichtung oder in Fahrzeuglängsrichtung ausgerichtet werden.

Weitere Vorteile, Merkmale und Einzelheiten der Erfindung ergeben sich aus der nachfolgenden Beschreibung bevorzugter Ausführungsformen sowie anhand der Zeichnungen. Dabei zeigen:
- Figur 1: eine Speicheranordnung aus Rohrspeichern mit drei verbundenen Rohrspeicherabschnitten,
- Figur 2: eine Seitenansicht auf die Speicheranordnung nach Figur 1 mit Querträgern,
- Figur 3: eine Detaildarstellung der Speicheranordnung nach Figur 2 mit einem alternativen Querträger,
- Figur 4: eine als Baugruppe aufgebaute Speicheranordnung,
- Figur 5: eine Detaildarstellung der Baugruppe nach Figur 4 mit einem Querträger,
- Figur 6: eine Detaildarstellung von über eine Rohrspeicherschleife verbundenen Rohrspeichern,
- Figur 7: eine Detaildarstellung mehrerer über Rohrspeicherschleifen verbundenen Rohrspeichern eines Rohrspeicherabschnittes,
- Figur 8: eine Speicheranordnung nach Figur 4 mit einem Befestigungsrahmen,
- Figur 9: eine Speicheranordnung nach Figur 8 in einer alternativen Ausführung mit einer Fußgarage in einer Schnittansicht gemäß Schnitt IX-IX nach Figur 10,
- Figur 10: eine Speicheranordnung nach Figur 9 in einer Draufsicht,
- Figur 11: eine Speicheranordnung nach Figur 9 in einer alternativen Ausführung in einer Schnittansicht gemäß Schnitt IX-IX nach Figur 12,
- Figur 12: eine Speicheranordnung nach Figur 11 in einer Draufsicht,
- Figur 13: eine Speicheranordnung nach Figur 12 in einer alternativen Ausführung in einer Draufsicht, und
- Figur 14: eine Speicheranordnung nach Figur 10 in einer alternativen Ausführung.

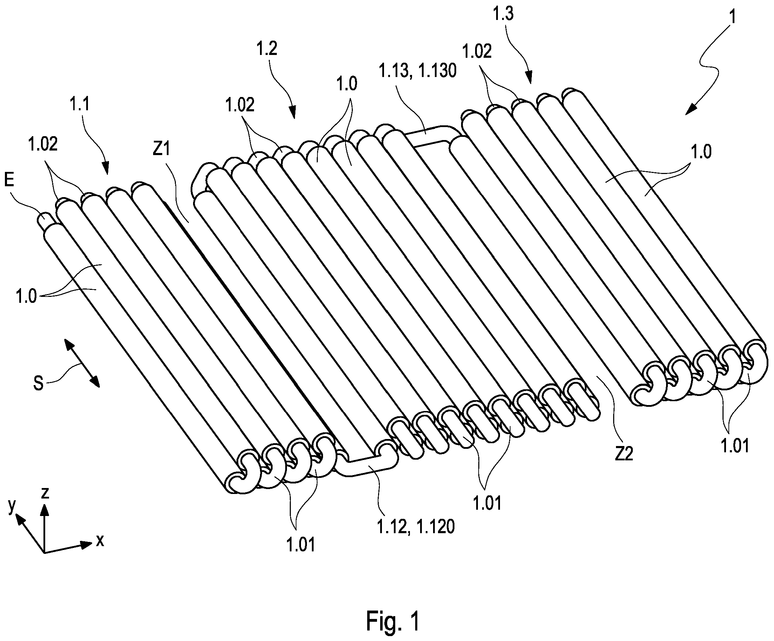

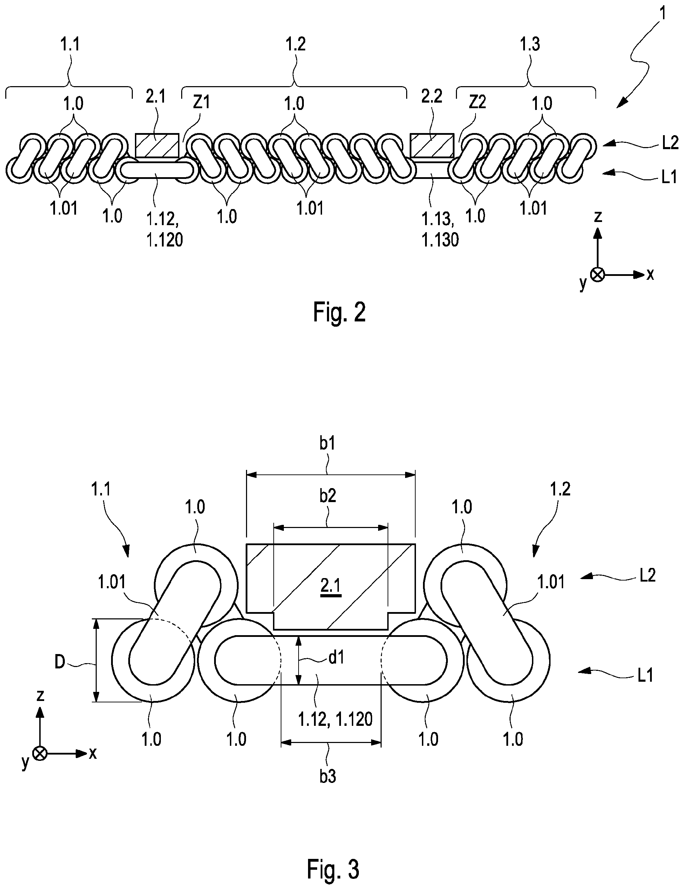

Die in den Figuren 1 und 2 dargestellte Speicheranordnung 1 für ein Fahrzeug zum Speichern und Abgeben eines Druckgases besteht aus mehreren Rohrspeichern 1.0, die jeweils gruppenweise zu einem ersten Rohrspeicherabschnitt 1.1, einem zweiten Rohrspeicherabschnitt 1.2 und einem dritten Rohrspeicherabschnitt 1.3 zusammengefasst sind, wobei der erste und zweite Rohrspeicherabschnitt 1.1 und 1.2 über ein als Verbindungsrohr 1.120 ausgebildetes Fluidverbindungsmittel 1.12 unter Ausbildung eines Zwischenraumes Z1 und der zweite und dritte Rohrspeicherabschnitt 1.2 und 1.3 über ein Verbindungsrohr 1.130 als weiteres Fluidverbindungsmittel 1.13 unter Ausbildung eines Zwischenraumes Z2 fluidverbunden sind.

Jeder der drei Rohrspeicherabschnitte 1.1, 1.2 und 1.3 besteht aus zwei Lagen L1 und L2 von Rohrspeichern 1.0 und liegen bezüglich ihrer Längsrichtung S parallel derart bauraumsparend aufeinander, dass benachbarte Rohrspeicher aus der unteren Lage L1 und der oberen Lage L2 bezüglich deren Längsachse um 60° versetzt sind, d. h. der kreisförmige Umfang eines Rohrspeicher 1.0 liegt tangential an den kreisförmigen Umfängen der in der benachbarten Lage L1 oder L2 liegenden Rohrspeicher 1.0.

Die Rohrspeicher 1.0 der Rohrspeicherabschnitte 1.1, 1.2 und 1.3 sind jeweils an den gleichen axialen Enden mittels Rohrspeicherschleifen 1.01 bzw. 1.02 fluidverbunden, so dass ein mäanderförmiger Fluidverlauf entsteht. Hierbei wird das Druckgas bspw. von einem Eingang E eines Rohrspeichers 1.0 der unteren Lage L1 in einen direkt benachbarten Rohrspeicher 1.0 der zweiten Lage L2 nach oben und anschließend wieder in einen direkt benachbarten Rohrspeicher 1.0 der ersten Lage nach unten usw. geleitet.

Das die beiden Rohrspeicherabschnitte 1.1 und 1.2 verbindende Verbindungsrohr 1.12 verbindet jeweils die gleichen axialen Enden der in der ersten Lage L1 der benachbarten Rohrspeicher 1.0 des ersten und zweiten Rohrspeicherabschnittes 1.1 und 1.2 und verläuft daher waagrecht in der von der ersten Lage L1 gebildeten Ebene.

Die beiden Rohrspeicherabschnitte 1.2 und 1.3 werden auf der gegenüberliegenden Seite über die jeweils gleichen axialen Enden der in der ersten Lage L1 der benachbarten Rohrspeicher 1.0 des zweiten und dritten Rohrspeicherabschnittes 1.2 und 1.3 mittels des Verbindungsrohrs 1.13 fluidverbunden, welches ebenso waagrecht in der von der ersten Lage L1 gebildeten Ebene verläuft.

Die durch die beabstandeten Rohrspeicherabschnitte 1.1, 1.2 und 1.3 geschaffenen Zwischenräume Z1 und Z2 werden für die Installation von mit der Struktur einer Fahrzeugkarosserie zu verbindenden Querträgern 2.1 und 2.2 (vgl. Figur 2) genutzt. Hierbei sind die beiden Querträger 2.1 und 2.2 in den Zwischenräumen Z1 und Z2 in der von der zweiten Lage L2 gebildeten Ebene angeordnet, fluchten also mit den Rohrspeichern 1.0 der zweiten Ebene L2, ohne dass der Bereich der Verbindungsrohre 1.12 und 1.13 gekreuzt wird. Der Querschnitt dieser Querträger 2.1 und 2.2 ist zum einen an den Abstand b1 (vgl. Figur 3) der beiden in der zweiten Lage L2 an den Zwischenraum Z1 bzw. Z2 angrenzenden Rohrspeicher 1.0 und zum anderen an den Durchmesser D (vgl. Figur 3) der Rohrspeicher 1.0 angepasst, so dass die Querträger 2.1 und 2.2 in ihrer Höhe die Rohrspeicher 1.0 der zweiten Lage L2 nicht überragen. Der Übersichtlichkeit halber sind die beiden Querträger 2.1 und 2.2 in der Speicheranordnung 1 nach Figur 1 nicht dargestellt.

Eine alternative Ausführung hinsichtlich der Querschnittsform der Querträger 2.1 und 2.2 zeigt Figur 3 anhand des Querträgers 2.1. Mit diesem Querträger 2.1 wird auch teilweise der Zwischenraum zwischen den mit dem Verbindungsrohr 1.12 verbundenen Rohrspeicher 1.0 ausgenutzt, da der Durchmesser d1 des Verbindungsrohrs 1.12 kleiner ist als der Durchmesser D eines Rohrspeicher 1.0. Damit kann der Querträger 2.1 mit einem T-förmigen Querschnitt an diesen Zwischenraum Z1 angepasst werden, wobei der Querabschnitt der T-Form an den Abstand b1 der an den Zwischenraum Z1 angrenzenden Rohrspeicher 1.0 der zweiten Lage L2 angepasst ist und somit dem Querschnitt des Querträgers 2.1 nach Figur 2 entspricht, während der Längsabschnitt der T-Form an den Abstand b2 zwischen den an den Zwischenraum Z1 angrenzenden Rohrspeicher 1.0 der ersten Lage L1 entlang der in Richtung der Rohrspeicher 1.0 der zweiten Lage L2 verlaufenden Kante des Verbindungsrohrs 1.12 angepasst ist. Der Abstand der Rohrspeicher 1.0 zwischen den Rohrspeichern 1.0 der ersten Lage L1 ist dabei mit dem Bezugszeichen b3 bezeichnet, wobei b3 < b2 gilt.

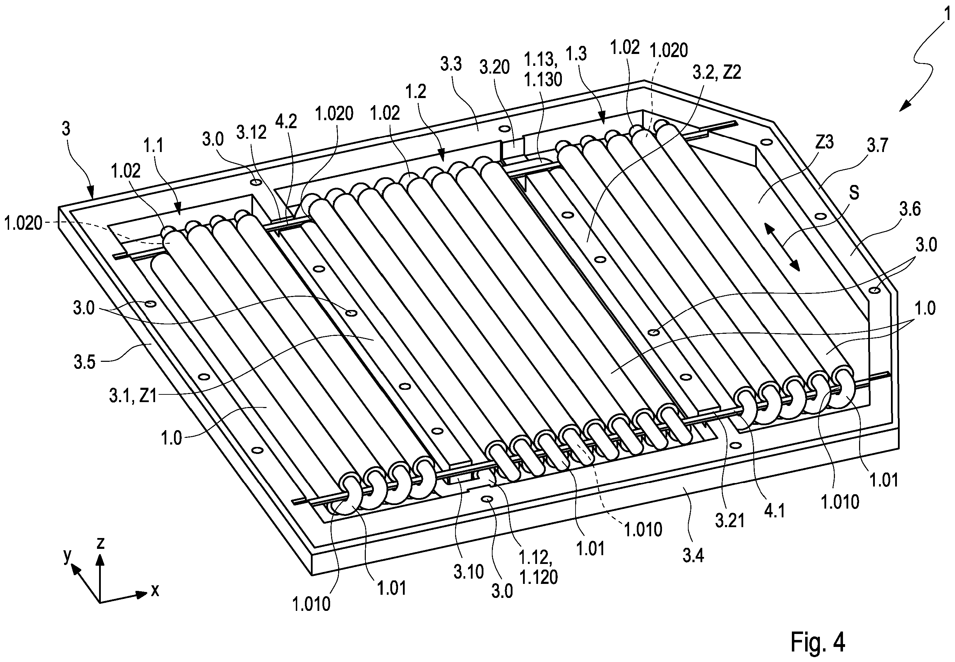

Die Figur 4 zeigt eine als Baugruppe ausgebildete Speicheranordnung 1 mit den in Figur 1 dargestellten Rohrspeichern 1.0. Bei dieser Speicheranordnung 1 nach Figur 4 sind die Rohrspeicher 1.0 entsprechend derjenigen nach Figur 1 ebenso beabstandet in drei Rohrspeicherabschnitte 1.1, 1.2 und 1.3 unter Bildung der Zwischenräume Z1 und Z2 gruppiert. Auch diese Zwischenräume Z1 und Z2 werden randseitig von einem mit der ersten Lage fluchtenden Verbindungsrohr 1.12 und 1.13 zur Fluidverbindung der einzelnen Rohrspeicherabschnitte 1.1, 1.2 und 1.3 überbrückt.

Diese Anordnung der drei beabstandeten Rohrspeicherabschnitte 1.1, 1.2 und 1.3 werden von einem Rahmenträger 3 umrahmt, welcher im wesentlichen rechteckförmig mit vier Rahmenelementen 3.3, 3.4, 3.5 und 3.6 ausgebildet ist. Hierbei ist auf der einen Seite der axialen Enden der Rohrspeicher 1.0 der Rahmenträger 3.3 und auf der gegenüberliegenden Seite der Rahmenträger 3.4 angeordnet, während in Längsrichtung S der Rohrspeicher 1.0 die die beiden Rahmenelemente 3.3 und 3.4 verbindenden Rahmenträger 3.5 und 3.6 verlaufen.

Dieser Rahmenträger 3 umfasst ferner einen Quersteg 3.1 und einen Quersteg 3.2, die in dem Zwischenraum Z1 zwischen dem ersten und zweiten Rohrspeicherabschnitt 1.1 und 1.2 bzw. in dem Zwischenraum Z2 zwischen dem zweiten und dritten Rohrspeicherabschnitt 1.2 und 1.3 angeordnet sind und die beiden Rahmenelemente 3.3 und 3.4 des Rahmenträgers 3 kraftschlüssig verbinden.

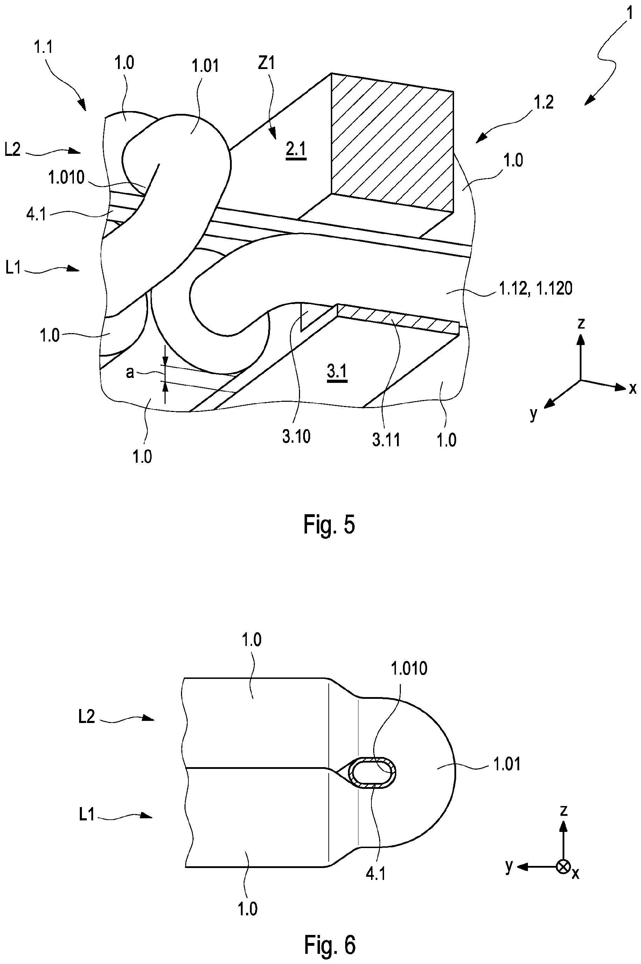

Hierbei verlaufen die beiden Querstege 3.1 und 3.2 in der von der ersten Lage L1 der Rohrspeicher 1.0 gebildeten Ebene, fluchten also mit den Rohrspeichern 1.0 der ersten Ebene L1 und kreuzen daher die die Rohrspeicherabschnitte 1.1, 1.2 und 1.3 fluidverbindenden Verbindungsrohre 1.12 und 1.13. Daher ist der Bereich des Quersteges 3.1, wo das Verbindungsrohr 1.12 hindurchgeführt wird, mit einem Ausschnitt 3.10 versehen, wie dies aus Figur 5 ersichtlich ist. Hierdurch wird der Querschnitt des Quersteges 3.1 bis auf einen schmalen Steg 3.11 reduziert, welcher mit dem Rahmenelement 3.4 kraftschlüssig verbunden ist.

Der Quersteg 3.1 ist in seinem Querschnitt an den Zwischenraum Z1 zwischen den in der ersten Lage L1 benachbarten Rohrspeichern 1.0 der ersten Lage L1 so angepasst, dass deren Breite dem Abstand b3 dieser beiden Rohrspeicher 1.0 und die Höhe geringfügig größer ist als der Durchmesser D der Rohrspeicher 1.0 (vgl. Figur 3). Damit ragt der Quersteg 3.1 nur nach unten um einen Überstand a über die erste Lage L1 hinaus, ragt jedoch nicht nach oben in Richtung der Rohrspeicher 1.0 der zweiten Lage L2 über die Rohrspeicher 1.0 der ersten Lage hinaus. In diese Richtung nach oben schließt sich der Querträger 2.1 mit einem entsprechend von Figur 2 ausgeführten Querschnitt an. Damit kann der Quersteg 3.1 einstückig zusammen mit dem Querträger 2.1 hergestellt werden.

Wird ein Querträger 2.1 mit einem gemäß von Figur 3 ausgeführten Querschnitt eingesetzt, reduziert sich die Höhe des Quersteges 3.1 entsprechend, da der Querträger 2.1 teilweise in die erste Lage L1 nach unten ragt. Auch in diesem Fall ragt dieser derart ausgeführt Quersteg 3.1 nach unten mit einem Überstand a über die Rohrspeicher 1.0 der ersten Lage L1 hinaus.

In entsprechender Weise ist auch der zwischen dem zweiten Rohrspeicherabschnitt 1.2 und dem dritten Rohspeicherabschnitt 1.3 angeordnete Quersteg 3.2 ausgeführt und weist einen Ausschnitt 3.20 zur Durchführung des Verbindungsrohres 1.13 auf. Auch der Querschnitt dieses Quersteges 3.2 ist an die Breite b3 des Zwischenraums Z2 quer zur Längsrichtung S der Rohrspeicher 1.0 angepasst und geringfügig größer als der Durchmesser D der Rohrspeicher 1.0, so dass der Quersteg 3.2 nach oben in Richtung der zweiten Lage L2 nicht über die Rohrspeicher 1.0 der ersten Lage hinausragt, jedoch nach unten mit einem Überstand a die Rohrspeicher 1.0 der ersten Lage L1 überragt.

Auch der Rahmenträger 3 ist relativ zu den drei Rohrspeicherabschnitten 1.1, 1.2 und 1.3 derart ausgeführt, dass die Rahmenelemente 3.3 bis 3.6 in Anpassung an die beiden Querstege 3.1 und 3.2 in der Ebene der ersten Lage L1 der Rohrspeicher 1.0 verlaufen, also nicht nach oben über die Rohrspeicher 1.0 der ersten Lage L1 hinausragen, jedoch mit der gleichen Höhe entsprechend der Querstege 3.1 und 3.2 die Speicherrohre 1.0 der ersten Lage L1 mit dem Überstand a überragen.

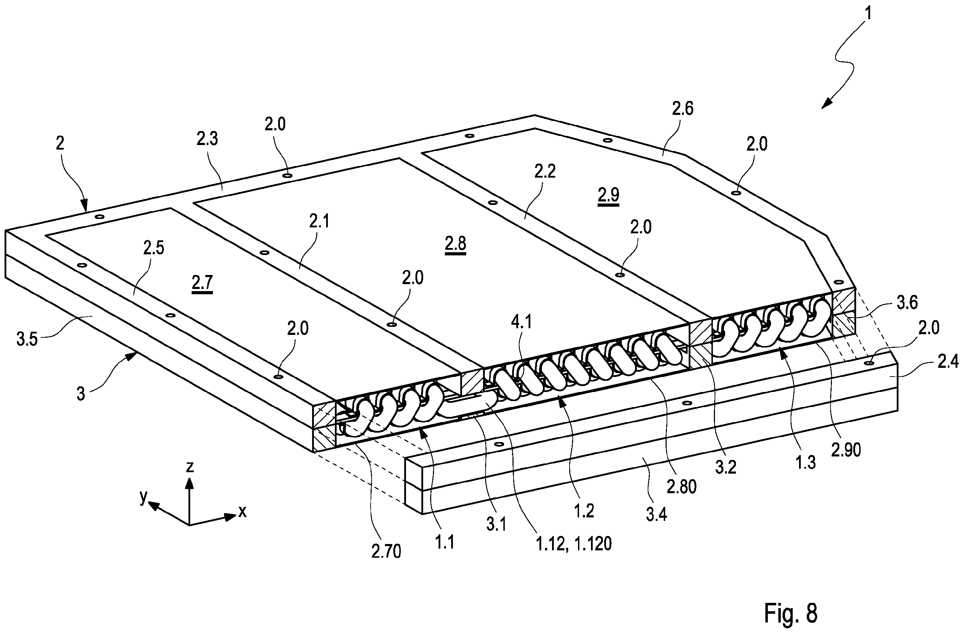

Dadurch dass der Rahmenträger 3 zusammen mit den Querstegen 3.1 und 3.2 die Rohrspeicher 1.0 der ersten Lage L1 nach unten in Fahrzeughochrichtung (z-Richtung) überragt, lassen sich die Abschnitte zwischen dem Rahmenelement 3.5 und dem Quersteg 3.1, zwischen dem Quersteg 3.1 und dem Quersteg 3.2 sowie zwischen dem Quersteg 3.2 und dem Rahmenelement 3.2 mittels Deckelelementen 2.70, 2.80 und 2.90 verschließen (vgl. Figur 8), so dass bei einer Montage der Speicheranordnung 1 nach Figur 4 an der Karosserie eines Fahrzeugs die Rohrspeicher 1.0 durch diese von denselben beabstandeten Deckelelemente 2.70, 2.80 und 2.90 als Bodenplatte von unten bspw. durch Steinschlag oder Bodenunebenheiten geschützt sind und so bei einer Krafteinwirkung von unten ein ausreichender Deformationsweg zur Verfügung steht.

In Figur 5 ist der in den Figuren 1 und 2 beschriebene Querträger 2.1 dargestellt, welcher fluchtend mit dem Quersteg 3.1 in dem Zwischenraum Z1 und in Höhe der Rohrspeicher 1.0 der zweiten Lage L2 verläuft, so dass der Querträger 2.1 die Rohrspeicher 1.0 der zweiten Lage L2 nach oben, also in entgegengesetzter Richtung zur ersten Lage L1 nicht überragt. Der Übersichtlichkeit halber ist dieser Querträger 2.1 und der Querträger 2.2 entsprechend von Figur 2 in der Darstellung der Speicheranordnung 1 nach Figur 4 nicht eingezeichnet.

Über Befestigungspunkte 3.0 der beiden Querstege 3.1 und 3.2 wird der Rahmenträger 3 mit den Querträgern 2.1 und 2.2 kraftschlüssig verbunden.

Als Baugruppe kann die Speicheranordnung 1, bestehend aus drei Rohrspeicherabschnitten 1.1, 1.2 und 1.3 zusammen mit dem Rahmenträger 3, nicht nur über die Querträger 2.1 und 2.2 mit der Struktur der Fahrzeugkarosserie kraftschlüssig verbunden werden, sondern ebenso der Rahmenträger 3 mittels auf den Rahmenelementen 3.3, 3.4, 3.5 und 3.6 vorgesehenen Befestigungspunkten 3.0.

Das Rahmenelement 3.6 des Rahmenträgers 3 ist nach Figur 4 nicht geradlinig, sondern mit einer nach außen gerichteten geringfügigen Ausbuchtung ausgeführt so dass zwischen dem dritten Rohrspeicherabschnitt 1.3 und dem Rahmenelement 3.6 ein Bauraum Z3 für Ventile und eine Druckregeleinheit entsteht.

Es ist auch möglich, sowohl den Querträger 2.1 und den Quersteg 3.1 als auch den Querträger 2.2 und den Quersteg 3.2 einstückig herzustellen und anschließend mit der Struktur der Fahrzeugkarosserie zu verbinden.

Der Rahmenträger 3 nach Figur 4 weist neben den Rahmenelementen 3.1 bis 3.6 einen parallel zum Rahmenelement 3.4 verlaufenden stangenförmigen Befestigungsträger 4.1 und einen weiteren parallel zum Rahmenelement 3.3 verlaufenden stangenförmigen Befestigungsträger 4.2, die jeweils endseitig mit den Rahmenelementen 3.5 und 3.6 kraftschlüssig verbunden sind.

Ferner ist aus Figur 4 ersichtlich, dass der Befestigungsträger 4.1 senkrecht zur Längsrichtung S der Rohrspeicher 1.0 durch die Öffnungen 1.010 der am gleichen axialen Ende der Rohrspeicher 1.0 liegenden Rohrspeicherschlaufen 1.01 geführt ist, wie dies im Detail in Figur 6 dargestellt ist. Der weitere Befestigungsträger 4.2 ist durch die Öffnungen 1.020 der auf der gegenüberliegenden Seite liegenden Rohrspeicherschlaufen 1.02 geführt. Hierbei ist der Querschnitt dieser Befestigungsträger 4.1 und 4.2 an die Kontur der Öffnungen 1.010 und 1.020 der Rohrspeicherschlaufen 1.01 und 1.02 entsprechend der Darstellung nach Figur 5 angepasst.

Da diese Befestigungsträger 4.1 und 4.2 in der von den Rohrspeichern 1.0 der ersten Lage L1 gebildeten Ebene verlaufen, müssen diese durch die Querstege 3.1 und 3.2 geführt werden und weisen hierzu entsprechende Ausschnitte auf. Im Bereich der Verbindungsrohre 1.12 und 1.13 dienen hierzu die bereits vorhandenen Ausschnitte 3.10 und 3.20 der Querstege 3.1 und 3.2. An den gegenüberliegenden Enden der Querstege sind weitere Ausschnitte 3.12 und 3.21 zur Durchführung der Befestigungsträger 4.1 und 4.2 vorgesehen. Hierbei können die Ausschnitte 3.10 und 3.12 in dem Quersteg 3.1 bzw. die Ausschnitte 3.20 und 3.21 in dem Quersteg 3.2 jeweils endseitig gleich ausgestaltet werden.

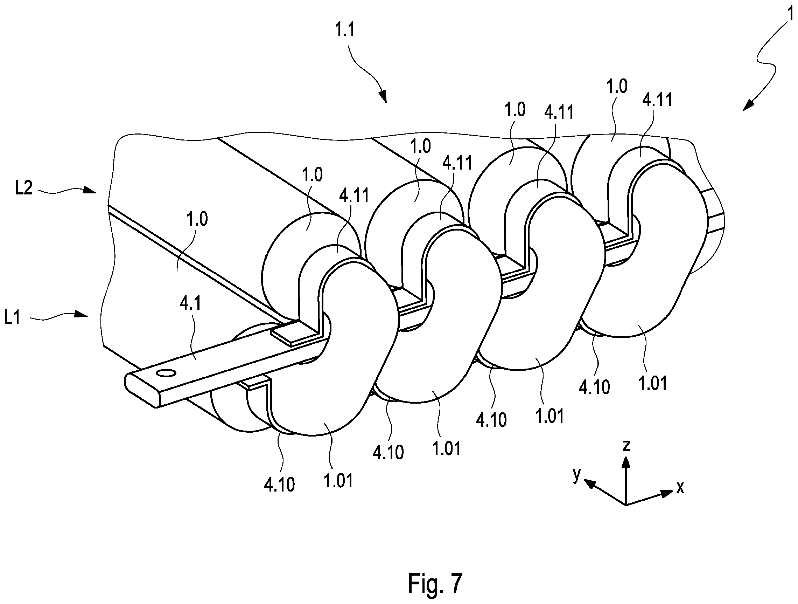

Die Rohrspeicherschlaufen 1.01 und 1.02 werden mittels als Rohrschellen ausgebildeten Befestigungslaschen 4.10 und 4.11 mit den Befestigungsträgern 4.1 und 4.2 kraftschlüssig verbunden, wie dies beispielhaft für den Befestigungsträger 4.1 in Figur 7 dargestellt ist. Die Rohrspeicherschlaufen 1.01 werden jeweils zum einen mit Befestigungslaschen 4.10 an deren unteren mit Rohrspeichern 1.0 der ersten Lage L1 verbundenen Ende mit dem Befestigungsträger 4.1 und zum anderen mit Befestigungslaschen 4.11 an deren oberen mit Rohrspeichern 1.0 der zweiten Lage L2 verbundenen Ende mit dem Befestigungsträger 4.1 kraftschlüssig verbunden.

Die als Baugruppe ausgeführte Speicheranordnung nach Figur 4 wird über die Querträger 2.1 und 2.2 mit der Struktur der Karosserie des Fahrzeugs verbunden und dadurch in dieselbe integriert, bspw. indem der Rahmenträger 3 über Befestigungspunkte 3.0 mit dem Unterboden der Fahrzeugkarosserie kraftschlüssig verbunden werden. Zusätzlich kann eine Dichtung 3.7 für den Schallschutz auf den Rahmenelementen 3.3 bis 3.6 des Rahmenträgers vorgesehen werden.

Die Figur 8 zeigt eine weitere Ausführung der Speicheranordnung 1 als Baugruppe zur Montage und Integration in eine Fahrzeugkarosserie. Ausgehend von der Speicheranordnung 1 nach Figur 4 wird ein Befestigungsrahmen 2 mit einer zum Rahmenträger 3 kongruenten Struktur mit diesem Rahmenträger 3 verbunden.

Dieser Befestigungsrahmen 2 umfasst neben den beiden Querträgern 2.1 und 2.2 entsprechend den Darstellungen gemäß den Figuren 2, 3 und 4 Trägerelemente 2.3, 2.4, 2.5 und 2.6. Dieser Befestigungsrahmen 2 wird mit dessen Trägerelementen 2.3 bis 2.6 derart auf den Rahmenträger 3 gelegt, dass die einzelnen Trägerelemente 2.3 bis 2.6 deckungsgleich auf den entsprechenden Rahmenelementen 3.3 bis 3.6 des Rahmenträgers 3 liegen, dies gilt natürlich ebenso für die beiden Querträger 2.1 und 2.2 und die beiden Querstege 3.1 und 3.2. Damit liegt der Befestigungsrahmen 2 in der Ebene der von den Rohrspeichern 1.0 gebildeten zweiten Lage L2. Die von den Trägerelementen 2.3 bis 2.6 und den Querträgern 2.1 und 2.2 gebildeten Zwischenräume werden mittels Deckelelementen 2.7, 2.8 und 2.9 verschlossen. So verschließt das Deckelelement 2.7 den Bereich zwischen dem Querträger 2.1 und dem Trägerelement 2.5, das Deckelelement 2.8 den Bereich zwischen den beiden Querträgern 2.1 und 2.2 und schließlich das Deckelelement 2.9 den Bereich zwischen dem Querträger 2.2 und dem Trägerelement 2.6.

Alternativ oder zusätzlich können die Zwischenräume zwischen dem Rahmenelement 3.5 und dem Quersteg 3.1, zwischen dem Quersteg 3.1 und dem Quersteg 3.2 sowie zwischen dem Quersteg 3.2 und dem Rahmenelement 2.6 des Rahmenträgers 3 mit Deckelelementen 2.70, 2.80 und 2.90 abgedeckt werden. Diese Deckelelemente 2.70, 2.80 und 2.90 bilden eine Bodenplatte mit ausreichendem Abstand zu den Rohrspeichern 1.0 der ersten Lage L1, da der Rahmenträger 3 zusammen mit den Querstegen 3.1 und 3.2 die Rohrspeicher 1.0 der ersten Lage L1 nach unten in Fahrzeughochrichtung (z-Richtung) entsprechend dem Überstand a (vgl. Figur 5) überragt. So ist bei einer Krafteinwirkung von unten auf das Fahrzeug, also auf die Speicheranordnung 1 nach Figur 8 ein ausreichender Deformationsweg vorhanden, um eine Beschädigung der Speicherrohre 1.0 zu vermeiden.

Der Befestigungsrahmen 2 weist Befestigungspunkte 2.0 auf, über die die Speicheranordnung 1 nach Figur 7 mit Trägern der Fahrzeugkarosserie kraftschlüssig verbunden sind.

Ferner ist es auch möglich, den Befestigungsrahmen 2 zusammen mit dem Rahmenträger 3 einstückig auszubilden.

Schließlich kann die Speicheranordnung 1 nach Figur 4 und damit auch nach Figur 8 auch nur mit zwei Rohrspeicherabschnitten 1.1 und 1.2 ausgeführt werden, so dass hierfür nur ein Querträger 2.1 bzw. nur ein Quersteg 3.1 für den Rahmenträger 3 bzw. den Befestigungsrahmen 2 erforderlich ist.

Diese als Baugruppe ausgeführte Speicheranordnung 1 nach Figur 8 übernimmt im Fahrzeug eine Strukturfunktion, indem diese Baugruppe über die Komponenten 2.1 bis 2.6 des Befestigungsrahmens 2, auch über die Querstege 3.1 und 3.2 sowohl in Fahrzeuglängsrichtung (x-Richtung) als auch in Fahrzeugquerrichtung (y-Richtung) hohe Kräfte aufnehmen kann.

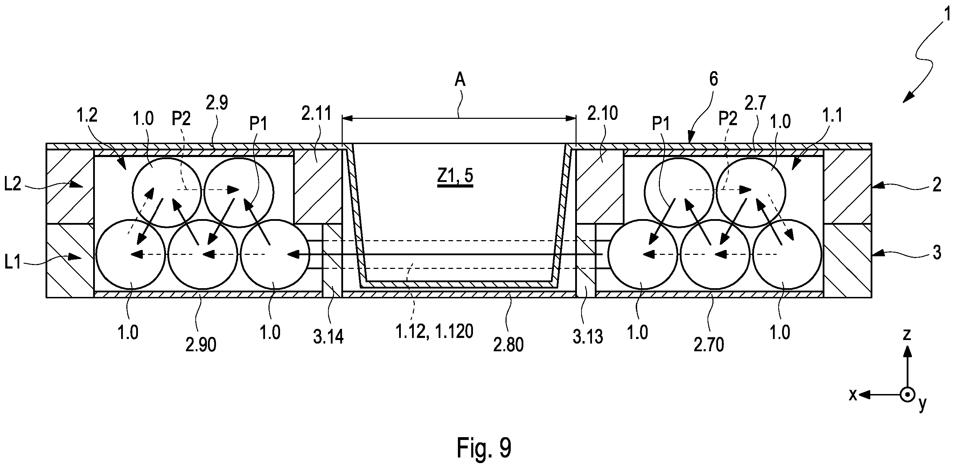

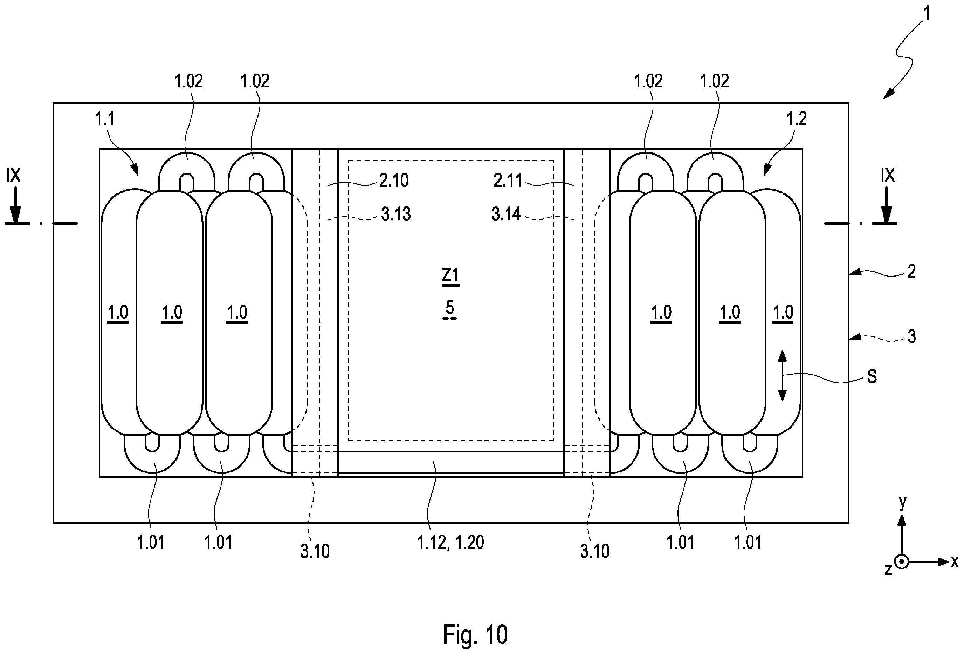

Eine alternative Ausführung der Speicheranordnung 1 nach Figur 8 ist in den Figuren 9 und 10 dargestellt, wobei diese Speicheranordnung 1 nur zwei Rohrspeicherabschnitte, nämlich einen ersten Rohrspeicherabschnitt 1.1 und einen zweiten Rohrspeicherabschnitt 1.2 aufweist.

Bei dieser Speicheranordnung 1 gemäß den Figuren 9 und 10 besteht der die beiden Rohrspeicherabschnitte 1.1 und 1.2 trennende Querträger 2.1 der Speicheranordnung 1 nach Figur 8 aus zwei Teilquerträgern 2.10 und 2.11, die zur Bildung des Zwischenraums Z1 in Fahrzeuglängsrichtung (x-Richtung) mit einem Abstand A beabstandet zueinander angeordnet sind. Die beiden Teilquerträger 2.10 und 2.11 verlaufen ebenfalls in der Ebene der zweiten Lage L2 der Rohrspeicher 1.0 der beiden Rohrspeicherabschnitte 1.1 und 1.2 entsprechend des Querträgers 2.1 der Speicheranordnung 1 nach Figur 4 oder Figur 8. Die beiden Rohrspeicherabschnitte 1.1 und 1.2 werden mittels eines als Verbindungsrohr 1.120 ausgebildeten Fluidverbindungsmittels 1.12 fluidverbunden, wobei die Länge des Verbindungsrohrs 1.120 an den Abstand A angepasst ist, so dass der Zwischenraum Z1 überbrückt wird.

Wie aus den Figuren 9 und 10 ersichtlich ist, weist die Speicheranordnung 1 auch einen Quersteg 3.1 auf, welcher aus zwei in der Ebene der ersten Lage L1 der Rohrspeicher 1.0 der beiden Rohrspeicherabschnitte 1.1 und 1.2 verlaufenden Teilquerstegen 3.13 und 3.14 besteht, die jeweils mit einem Teilquerträger 2.10 und 2.11 in Fahrzeughochrichtung (z-Richtung) fluchten. Das Verbindungsrohr 1.120 verläuft in der ersten Lage L1 der Rohrspeicher 1.0 der beiden Rohrspeicherabschnitte 1.1 und 1.2 und durchbricht hierbei die beiden Teilquerstege 3.13 und 3.14, die entsprechende Ausschnitte 3.10 aufweisen.

Die Teilquerstege 3.13 und 3.14 bilden zusammen mit Rahmenelementen 3.3 bis 3.6 (vgl. Figur 4) den Rahmenträger 3. Die Teilquerträger 2.10 und 2.11 bilden zusammen mit den Trägerelementen 2.3 bis 2.6 (vgl. Figur 8) den Befestigungsrahmen 2. Der Rahmenträger 3 kann auch zusammen mit dem Befestigungsrahmen 2 einstückig ausgeführt werden und bilden ein Gehäuse für die Rohrspeicher 1.0.

Bei einer Integration dieser Speicheranordnung 1 gemäß den Figuren 9 und 10 in ein Fahrzeug befindet sich der Bereich des Zwischenraums Z1 zwischen Vordersitzen und einer Rücksitzbank des Fahrzeugs und bildet für die Fondpassagiere eine Fußgarage 5 zum Abstellen von deren Füßen. In Figur 9 ist der Verlauf eines Fahrgastzellenbodens 6 des Fahrzeugs schematisch dargestellt, wobei der Zwischenraum Z1 die Fußgarage 5 bildet.

Die Rohrspeicher 1.0 der beiden Rohrspeicherabschnitte 1.1 und 1.2 sind jeweils mit Rohrspeicherschleifen 1.01 und 1.02 verbunden, wobei gemäß den Figuren 9 und 10 die Rohrspeicher 1.0 der ersten Lage L1 und der zweiten Lage L2 abwechselnd verbunden werden, wie dies mit den Pfeilen P1 nach Figur 9 dargestellt ist. Die Rohrspeicher 1.0 der jeweiligen Rohrspeicherabschnitte 1.1 und 1.2 können auch jeweils lagenweise fluidverbunden werden, wie dies mit den Pfeilen P2 (gestrichelt gezeichnet) gemäß Figur 9 dargestellt ist.

Der als Fußraum 5 genutzte Zwischenraum Z1 gemäß der Speicheranordnung 1 nach Figur 9 und 10 kann auch zur Anordnung von weiteren Rohrspeichern 1.0 in der Ebene der ersten Lage L1 verwendet werden, wodurch eine Fußgarage 5 mit einer in Fahrzeughochrichtung geringeren Tiefe entsteht.

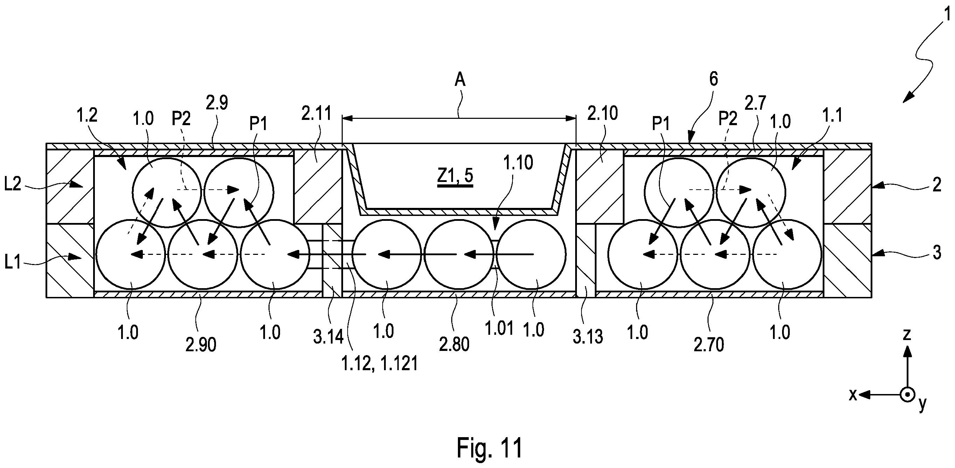

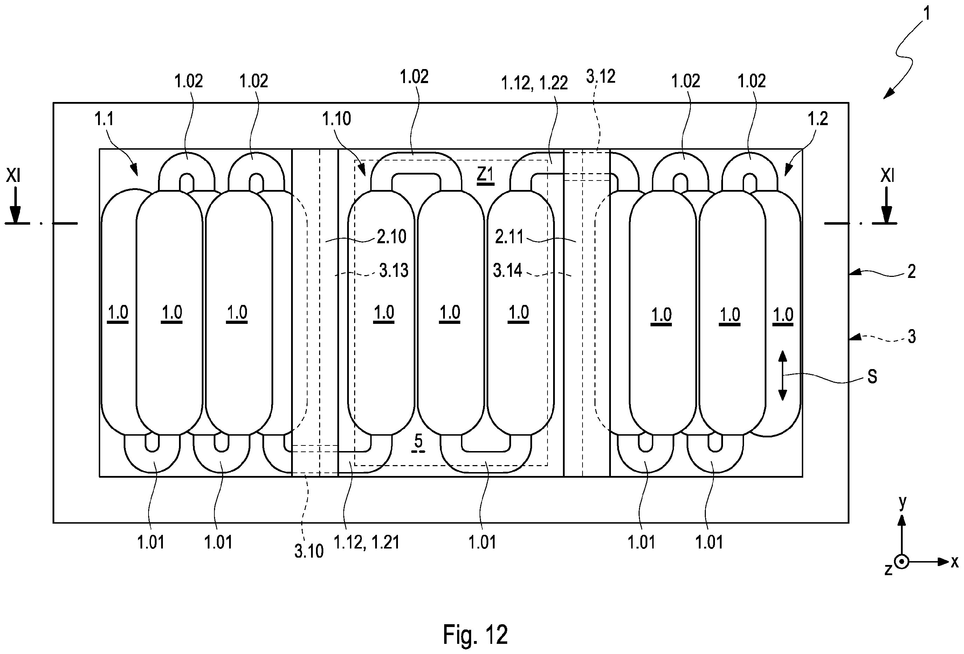

Eine solche Speicheranordnung 1 zeigen die Figuren 11 und 12, bei welcher in dem Zwischenraum Z1 ein Rohrspeicherzwischenabschnitt 1.10 mit beispielsweise drei Rohrspeichern 1.0 angeordnet ist. Diese Rohrspeicher 1.0 des Rohrspeicherzwischenabschnittes 1.10 liegen in der Ebene der ersten Lage L1 und sind mittels Rohrspeicherschleifen 1.01 und 1.02 mäanderförmig fluidverbunden.

Dadurch dass der erste und zweite Rohrspeicherabschnitt 1.1 und 1.2 jeweils aus zwei Lagen L1 und L2 von Rohrspeichern 1.0 aufgebaut ist, entsteht in dem Zwischenraum Z1 aufgrund der um eine Lage gegenüber den Rohrspeicherabschnitten 1.1 und 1.2 reduzierten Rohrspeichern 1.0 des Rohrspeicherzwischenabschnittes 1.10 eine Fußgarage 5, wie dies aus dem Verlauf eines schematisch angedeuteten Fahrgastzellenbodens 6 ersichtlich ist.

Die Fluidverbindung des Rohrspeicherzwischenabschnittes 1.10 mit den benachbarten Rohrspeicherabschnitten 1.1 und 1.2 erfolgt mittels eines Fluidverbindungsmittels 1.12, welches als erster Verbindungsrohrabschnitt 1.121 die benachbarten Rohrspeicher 1.0 des ersten Rohrspeicherabschnittes 1.1 und des Rohrspeicherzwischenabschnittes 1.10 fluidverbindet und welches als zweiter Verbindungsrohrabschnitt 1.122 die benachbarten Rohrspeicher 1.0 des zweiten Rohrspeicherabschnittes 1.2 und des Rohrspeicherzwischenabschnittes 1.10 fluidverbindet. Die beiden Verbindungsrohrabschnitte 1.121 und 1.122 werden über Ausschnitte 3.10 und 3.12 der Teilquerstege 3.13 und 3.14 geführt.

Die Rohrspeicher 1.0 der beiden Rohrspeicherabschnitte 1.1 und 1.2 sind jeweils mit Rohrspeicherschleifen 1.01 und 1.02 verbunden, wobei gemäß den Figuren 11 und 12 die Rohrspeicher 1.0 der ersten Lage L1 und der zweiten Lage L2 abwechselnd verbunden werden, wie dies mit den Pfeilen P1 nach Figur 11 dargestellt ist. Die Rohrspeicher 1.0 der jeweiligen Rohrspeicherabschnitte 1.1 und 1.2 können auch jeweils lagenweise fluidverbunden werden, wie dies mit den Pfeilen P2 (gestrichelt gezeichnet) gemäß Figur 11 dargestellt ist.

Der Rahmenträger 3 und der Befestigungsrahmen 2 der Speicheranordnung 1 mit den Teilquerstegen 3.13 und 3.14 und den Teilquerträgern 2.10 und 2.11 sind entsprechend derjenigen der Speicheranordnung nach Figur 9 und Figur 10 aufgebaut und bilden ein Gehäuse für die Rohrspeicher 1.0.

Die Rohrspeicherabschnitte 1.1 und 1.2 der Speicheranordnung 1 gemäß den Figuren 11 und 12 können natürlich auch mit mehr als zwei Lagen von Rohrspeichern 1.0 ausgebildet werden. Um eine entsprechende Fußgarage 5 auszubilden, wird der Rohrspeicherzwischenabschnitt 1.10 mit einer um wenigstens den Wert 1 reduzierten Anzahl von Lagen an Rohrspeichern 1.0 ausgeführt.

Die Speicheranordnung 1 gemäß den Figuren 11 und 12 kann auch ohne den ersten oder zweiten Rohrspeicherabschnitt 1.1 oder 1.2 ausgeführt werden, so dass die Speicheranordnung 1 aus dem Rohrspeicherzwischenabschnitt 1.10 als erster Rohrspeicherabschnitt mit der Fußgarage 5 und einem weiteren Rohrspeicherabschnitt als zweiter Rohrspeicherabschnitt 1.2 hergestellt ist.

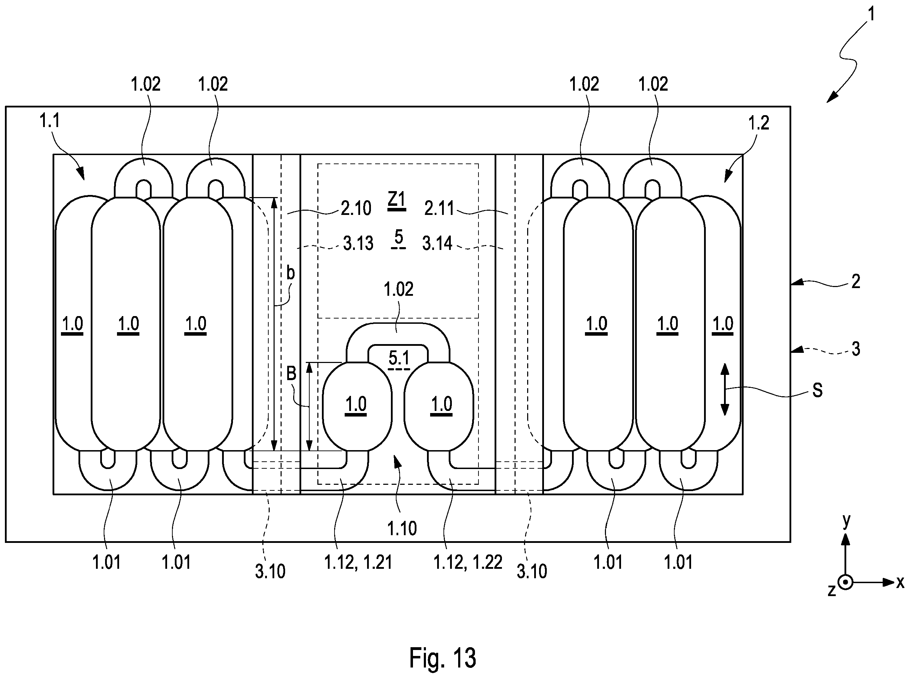

Die Figur 13 zeigt eine zur Speicheranordnung 1 gemäß den Figuren 11 und 12 alternative Speicheranordnung 1 mit einem ebenso in dem Zwischenraum Z1 angeordneten Rohrspeicherzwischenabschnitt 1.10 mit beispielhaft zwei Rohrspeichern 1.0. Der Unterschied zu der Speicheranordnung 1 gemäß den Figuren 11 und 12 besteht darin, dass die beiden Rohrspeicher 1.0 des Rohrspeicherzwischenabschnittes 1.10 in deren Längsrichtung S, also in Fahrzeugquerrichtung (y-Richtung) mit einer Länge B kürzer im Vergleich zu der Länge b der Rohrspeicher 1.0 der beiden Rohrspeicherabschnitte 1.1 und 1.2 ausgeführt sind, es gilt also B < b.

Damit entsteht eine Fußgarage 5 in Fahrzeughochrichtung gesehen oberhalb der Rohrspeicher 1.0 des Rohrspeicherzwischenabschnittes 1.10 und eine Fußgarage 5.1 im verbleibenden Bereich des Zwischenraums Z1, in welchem sich keine Rohrspeicher 1.0 befinden. Damit weist die Fußgarage 5.1 in Fahrzeughochrichtung eine größere Tiefe auf als die Fußgarage 5.

Auch bei dieser Speicheranordnung 1 gemäß Figur 13 können die Rohrspeicherabschnitte 1.1 und 1.2 mit mehr als zwei Lagen von Rohrspeichern 1.0 ausgebildet werden. Der Rohrspeicherzwischenabschnitt 1.10 weist dann zumindest eine um den Wert 1 reduzierte Anzahl von Lagen an Rohrspeichern 1.0 auf.

Schließlich kann die Speicheranordnung 1 nach Figur 13 entsprechend der Speicheranordnung 1 gemäß den Figuren 11 und 12 auch ohne den ersten und zweiten Rohrspeicherabschnitt 1.1 oder 1.2 ausgeführt werden, so dass die Speicheranordnung 1 aus dem Rohrspeicherzwischenabschnitt 1.10 als erster Rohrspeicherabschnitt mit der Fußgarage 5 und 5.1 und einem weiteren Rohrspeicherabschnitt als zweiter Rohrspeicherabschnitt 1.2 hergestellt ist.

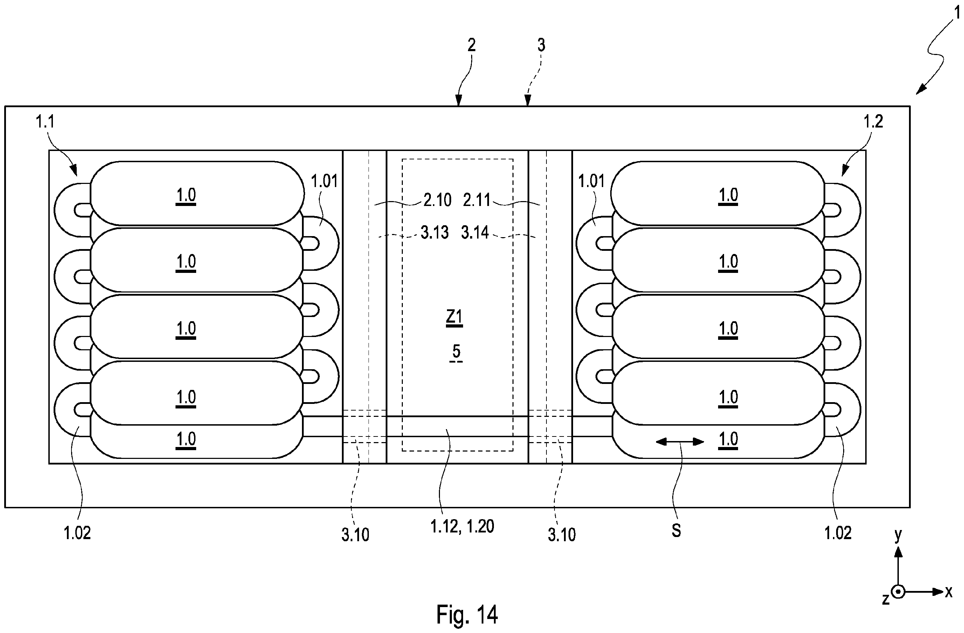

Die Figur 14 zeigt eine zur Speicheranordnung 1 gemäß den Figuren 9 und 10 alternative Speicheranordnung 1, bei welcher im Unterschied zu derjenigen nach Figur 10 die Rohrspeicher 1.0 des ersten und zweiten Rohrspeicherabschnittes 1.1 und 1.2 mit ihrer Längsrichtung S senkrecht zu den Teilquerträgern 2.10 und 2.11 und damit auch senkrecht zu den Teilquerstegen 3.13 und 3.14, also in Fahrzeuglängsrichtung (x-Richtung) ausgerichtet sind.

Der Zwischenraum Z1 bleibt frei von Rohrspeichern und bildet eine Fußgarage 5.

Die Rohrspeicher 1.0 der Rohrspeicherabschnitte 1.1 und 1.2 sind mittels Rohrspeicherschleifen 1.01 und 1.02 mäanderförmig verbunden. Nach Figur 14 verbinden hierbei die Rohrspeicherschleifen 1.01 und 1.02 jeweils benachbarte Rohrspeicher 1.0 der ersten und zweiten Lage L1 und L2. Es ist natürlich auch möglich, die Rohrspeicher 1.0 in jeweils einer Lage lagenweise zu verbinden.

Nach Figur 14 werden randseitige und miteinander fluchtende Rohrspeicher 1.0 der beiden Rohrspeicherabschnitte 1.1 und 1.2 mittels eines als Verbindungsrohr 1.120 ausgeführten Fluidverbindungsmittels 1.12 fluidverbunden. Dieses Verbindungsrohr 1.120 ist über Ausschnitte 3.10 der Teilquerstege 3.13 und 3.14 geführt.

### BEZUGSZEICHEN

- 1: Speicheranordnung
- 1.0: Rohrspeicher der Speicheranordnung 1
- 1.01: Rohrspeicherschleife
- 1.010: Öffnung der Rohrspeicherschleife 1.01
- 1.02: Rohrspeicherschleife
- 1.020: Öffnung der Rohrspeicherschleife 1.02
- 1.1: erster Rohrspeicherabschnitt der Speicheranordnung 1
- 1.10: Rohrspeicherzwischenabschnitt
- 1.12: Fluidverbindungsmittel
- 1.120: Verbindungsrohr
- 1.121: erster Verbindungsrohrabschnitt
- 1.122: zweiter Verbindungsrohrabschnitt
- 1.13: Fluidverbindungsmittel
- 1.130: Verbindungsrohr
- 1.2: zweiter Rohrspeicherabschnitt der Speicheranordnung 1
- 1.3: dritter Rohrspeicherabschnitt der Speicheranordnung 1

- 2: Befestigungsrahmen
- 2.0: Befestigungspunkt des Befestigungsrahmen 2
- 2.1: Querträger
- 2.10: Teilquerträger des Querträgers 2.1
- 2.11: Teilquerträger des Querträgers 2.1
- 2.2: Querträger
- 2.3: Trägerelement des Befestigungsrahmens 2
- 2.4: Trägerelement des Befestigungsrahmens 2
- 2.5: Trägerelement des Befestigungsrahmens 2
- 2.6: Trägerelement des Befestigungsrahmens 2
- 2.7: Deckelelement des Befestigungsrahmens 2
- 2.70: Deckelelement
- 2.8: Deckelelement des Befestigungsrahmens 2
- 2.80: Deckelelement
- 2.9: Deckelelement des Befestigungsrahmens 2
- 2.90: Deckelelement

- 3: Rahmenträger
- 3.0: Befestigungspunkt des Rahmenträgers 3
- 3.1: Quersteg des Rahmenträgers 3
- 3.10: Ausschnitt des Quersteges 3.1
- 3.11: Steg des Quersteges 3.1 am Ausschnitt 3.10
- 3.12: weiterer Ausschnitt des Quersteges 3.1
- 3.13: Teilquersteg des Quersteges 3.1
- 3.14: Teilquersteg des Quersteges 3.1
- 3.2: Quersteg des Rahmenträgers 3
- 3.20: Ausschnitt des Quersteges 3.2
- 3.21: weiterer Ausschnitt des Quersteges 3.2
- 3.3: Rahmenelement des Rahmenträgers 3
- 3.4: Rahmenelement des Rahmenträgers 3
- 3.5: Rahmenelement des Rahmenträgers 3
- 3.6: Rahmenelement des Rahmenträgers 3
- 3.7: Dichtung

- 4.1: Befestigungsträger des Rahmenträgers 3
- 4.10: Befestigungslasche
- 4.11: Befestigungslasche
- 4.2: Befestigungsträger des Rahmenträgers 3

- 5: Fußgarage
- 6: Fahrgastzellenboden eines Fahrzeugs

- A: Abstand
- a: Überstand
- B: Länge
- b: Länge
- b1: Abstand
- b2: Abstand
- b3: Abstand
- d1: Durchmesser
- D: Durchmesser

- S: Längsrichtung der Rohrspeicher 1.0
- E: Eingang eines Rohrspeichers 1.0
- Z1: Zwischenraum
- Z2: Zwischenraum
- Z3: Bauraum innerhalb des Rahmenträgers 3

## Patentansprüche

1. Speicheranordnung (1) für ein Fahrzeug zum Speichern und Abgeben eines Druckgases mit:
- einem ersten Rohrspeicherabschnitt (1.1) mit mehreren in einer ersten Lage (L1) und wenigstens in einer zweiten Lage (L2) längsparallel zueinander angeordneten Rohrspeicher (1.0), die an deren axialen Enden mittels Rohrspeicherschleifen (1.01, 1.02) mäanderförmig fluidverbunden sind,
- wenigstens einem zweiten Rohrspeicherabschnitt (1.2) mit mehreren in einer ersten Lage (L1) und wenigstens in einer zweiten Lage (L2) längsparallel zueinander angeordneten Rohrspeicher (1.0), die an deren axialen Enden mittels Rohrspeicherschleifen (1.01, 1.02) mäanderförmig fluidverbunden sind, und
- einem Fluidverbindungsmittel (1.12, 1.13) zum Fluidverbinden des ersten und zweiten Rohrspeicherabschnittes (1.1, 1.2),
**dadurch gekennzeichnet, dass**
- das Fluidverbindungsmittel (1.12, 1.13) die jeweils gleichen axialen Enden von zwei entweder in der ersten Lage (L1) auf einer Ebene benachbarten Rohrspeicher (1.0) oder in der zweiten Lage (L2) auf einer Ebene benachbarten Rohrspeicher (1.0) fluidverbindet, und
- ein Zwischenraum (Z1) zwischen dem ersten und zweiten Rohrspeicherabschnitt (1.1, 1.2) zur Aufnahme eines Querträgers (2.1) der Karosserie des Fahrzeugs vorgesehen ist, welcher entweder mit der zweite Lage (L2) der Rohrspeicher (1.0) fluchtet, wenn das Fluidverbindungsmittel (1.12, 1.13) mit der ersten Lage (L1) der Rohrspeicher (1.0) fluchtet, oder mit der ersten Lage (L1) der Rohrspeicher (1.0) fluchtet, wenn das Fluidverbindungsmittel (1.12) mit der zweiten Lage (L2) der Rohrspeicher (1.0) fluchtet.

2. Speicheranordnung (1) nach Anspruch 1,
**dadurch gekennzeichnet, dass**
die Speicheranordnung (1) einen den ersten Rohrspeicherabschnitt (1.1) und den zweiten Rohrspeicherabschnitt (1.2) umrahmenden Rahmenträger (3) aufweist.

3. Speicheranordnung (1) nach Anspruch 2,
**dadurch gekennzeichnet, dass**
die Speicheranordnung (1) einen zwischen dem ersten und zweiten Rohrspeicherabschnitt (1.1, 1.2) angeordneten Quersteg (3.1) umfasst, welcher mit derjenigen ersten oder zweiten Lage (L1, L2) fluchtet, mit der auch das Fluidverbindungsmittel (1.12) fluchtet, wobei das Fluidverbindungsmittel (1.12) durch den Quersteg (3.1) geführt und der Quersteg (3.1) endseitig mit dem Rahmenträger (3) kraftschlüssig verbunden ist.

4. Speicheranordnung (1) nach einem der vorhergehenden Ansprüche,
**dadurch gekennzeichnet, dass**
die Speicheranordnung (1) wenigstens einen stangenförmigen Befestigungsträger (4.1) aufweist, welcher durch die Öffnungen (1.010) der an einem gleichen axialen Ende der Rohrspeicher (1.0) liegenden Rohrspeicherschleifen (1.01) geführt und mit dem Rahmenträger (3) kraftschlüssig verbunden ist.

5. Speicheranordnung (1) nach einem der vorhergehenden Ansprüche,
**dadurch gekennzeichnet, dass**
das Fluidverbindungsmittel (1.12, 1.13) als Verbindungsrohr (1.120, 1.130) ausgebildet ist.

6. Speicheranordnung (1) nach einem der vorhergehenden Ansprüche
**dadurch gekennzeichnet, dass**
die Speicheranordnung (1) mit einem in dem Zwischenraum (Z1) angeordneten Rohrspeicherzwischenabschnitt (1.10) mit mehreren längsparallel in wenigstens der ersten Lage (L1) angeordneten Rohrspeichern (1.0) ausgebildet ist, die an deren axialen Enden mittels Rohrspeicherschleifen (1.01, 1.02) mäanderförmig fluidverbunden sind, wobei
- die Anzahl der Lagen der Rohrspeicher (1.0) des Rohrspeicherzwischenabschnittes (1.10) um wenigstens eine Lage gegenüber der Anzahl der Lagen der Rohrspeicher des ersten und/oder zweiten Rohrspeicherabschnittes (1.1, 1.2) kleiner ist, und
- das in der ersten Lage (L1) der Rohrspeicher (1.0) verlaufende Fluidverbindungsmittel (1.12) aus einem die benachbarten Rohrspeicher (1.0) des ersten Rohrspeicherabschnittes (1.1) und des Rohrspeicherzwischenabschnittes (1.10) fluidverbindenden ersten Verbindungsrohrabschnitt (1.121) und einem die benachbarten Rohrspeicher (1.0) des zweiten Rohrspeicherabschnittes (1.2) und des Rohrspeicherzwischenabschnittes (1.10) fluidverbindenden zweiten Verbindungsrohrabschnitt (1.122) besteht.

7. Speicheranordnung nach Anspruch 6,
**dadurch gekennzeichnet, dass** zumindest eine Lage (L1) der Rohrspeicher (1.0) des Rohrspeicherzwischenabschnittes (1.10) in Längsrichtung der Rohrspeicher (1.0) gegenüber den Rohrspeichern (1.0) des ersten und/oder zweiten Rohrspeicherabschnittes (1.1, 1.2) verkürzt ist.

8. Fahrzeug mit
- einer Speicheranordnung (1) nach einem der vorhergehenden Ansprüche zum Speichern und Abgeben eines Druckgases umfassend einen mit der Karosserie des Fahrzeugs kraftschlüssig verbundener Querträger (2.1),
wobei der Querträger (2.1) in dem Zwischenraum (Z1) zwischen dem ersten und zweiten Rohrspeicherabschnitt (1.1, 1.2) entweder fluchtend mit der zweite Lage (L2) der Rohrspeicher (1.0), wenn das Fluidverbindungsmittel (1.12) mit der ersten Lage (L1) der Rohrspeicher (1.0) fluchtet, oder fluchtend mit der ersten Lage (L1) der Rohrspeicher (1.0), wenn das Fluidverbindungsmittel (1.12) mit der zweiten Lage (L2) der Rohrspeicher (1.0) fluchtet, angeordnet ist.

9. Fahrzeug nach Anspruch 8,
**dadurch gekennzeichnet, dass**
der Querträger (2.1) zusammen mit Trägerelementen (2.3, 2.4, 2.5, 2.6) einen zum Rahmenträger (3) kongruenten Befestigungsrahmen (2) bildet, wobei die von dem Querträger (2.1) und den Trägerelementen (2.3, 2.4, 2.5, 2.6) gebildeten Zwischenräume mittels Deckelelementen (2.7, 2.8) und/oder die von den Rahmenelementen (3.3, 3.4, 3.5, 3.6) und dem Quersteg (3.1) des Rahmenträgers (3) gebildeten Zwischenräume mittels Deckelelementen (2.70, 2.80) verschlossen sind und der Befestigungsrahmen (2) mit dem Rahmenträger (3) kraftschlüssig verbunden ist oder einstückig hergestellt ist.

## Claims

1. Storage assembly (1) for a vehicle for storing and dispensing a pressurised gas, comprising:
- a first storage tube section (1.1) comprising a plurality of storage tubes (1.0) arranged longitudinally parallel to each other in a first layer (L1) and at least in a second layer (L2), which are fluidically connected in a meandering manner at their axial ends by means of storage tube loops (1.01, 1.02),
- at least one second storage tube section (1.2) comprising a plurality of storage tubes (1.0) arranged longitudinally parallel to one another in a first layer (L1) and at least in a second layer (L2), which are fluidically connected in a meandering manner at their axial ends by means of storage tube loops (1.01, 1.02), and
- a fluid connection means (1.12, 1.13) for fluidically connecting the first and second storage tube sections (1.1, 1.2),
**characterised in that**
- the fluid connection means (1.12, 1.13) fluidically connects the respective same axial ends of either two storage tubes (1.0) that are adjacent in the first layer (L1) on one plane or two storage tubes (1.0) that are adjacent in the second layer (L2) on one plane, and
- an intermediate space (Z1) is provided between the first and second storage tube sections (1.1, 1.2) for receiving a cross-member (2.1) of the body of the vehicle, which is either aligned with the second layer (L2) of the storage tubes (1.0) when the fluid connection means (1.12, 1.13) is aligned with the first layer (L1) of the storage tubes (1.0), or with the first layer (L1) of the storage tubes (1.0) when the fluid connection means (1.12) is aligned with the second layer (L2) of the storage tubes (1.0).

2. Storage assembly (1) according to claim 1,
**characterised in that** the storage assembly (1) has a frame support (3) that frames the first storage tube section (1.1) and the second storage tube section (1.2).

3. Storage assembly (1) according to claim 2,
**characterised in that** the storage assembly (1) comprises a transverse web (3.1) which is arranged between the first and second storage tube sections (1.1, 1.2) and which is aligned with that of the first or second layer (L1, L2) with which the fluid connection means (1.12) is also aligned, wherein the fluid connection means (1.12) is guided through the transverse web (3.1) and the transverse web (3.1) is connected at the end to the frame support (3) in a force-fitting manner.

4. Storage assembly (1) according any one of the preceding claims,
**characterised in that** the storage assembly (1) has at least one rod-shaped fastening support (4.1) which is guided through the openings (1.010) of the storage tube loops (1.01) located at the same axial end of the storage tubes (1.0) and is connected in a force-fitting manner to the frame support (3).

5. Storage assembly (1) according any one of the preceding claims,
**characterised in that** the fluid connection means (1.12, 1.13) is formed as a connecting tube (1.120, 1.130).

6. Storage assembly (1) according any one of the preceding claims
**characterised in that** the storage assembly (1) is formed with an intermediate storage tube section (1.10) arranged in the intermediate space (Z1) comprising a plurality of storage tubes (1.0) arranged longitudinally parallel in at least the first layer (L1), which are fluidically connected in a meandering manner at their axial ends by means of storage tube loops (1.01, 1.02), wherein
- the number of layers of the storage tubes (1.0) of the intermediate storage tube section (1.10) is smaller by at least one layer compared to the number of layers of the storage tubes of the first and/or second storage tube section (1.1, 1.2), and
- the fluid connection means (1.12) extending in the first layer (L1) of the storage tubes (1.0) consists of a first connecting tube section (1.121) fluidically connecting the adjacent storage tubes (1.0) of the first storage tube section (1.1) and of the intermediate storage tube section (1.10) and a second connecting tube section (1.122) fluidically connecting the adjacent storage tubes (1.0) of the second storage tube section (1.2) and of the intermediate storage tube section (1.10).

7. Storage assembly according to claim 6,
**characterised in that** at least one layer (L1) of the storage tubes (1.0) of the intermediate storage tube section (1.10) is shortened in the longitudinal direction of the storage tubes (1.0) relative to the storage tubes (1.0) of the first and/or second storage tube section (1.1, 1.2).

8. Vehicle comprising
- a storage assembly (1) according to any one of the preceding claims for storing and dispensing a pressurised gas, comprising a cross-member (2.1) connected to the body of the vehicle in a force-fitting manner,
wherein the cross-member (2.1) in the intermediate space (Z1) between the first and second storage tube sections (1.1, 1.2) is either aligned with the second layer (L2) of the storage tubes (1.0) when the fluid connection means (1. 12) is aligned with the first layer (L1) of the storage tubes (1.0), or aligned with the first layer (L1) of the storage tubes (1.0) when the fluid connection means (1.12) is aligned with the second layer (L2) of the storage tubes (1.0).

9. Vehicle according to claim 8,
**characterised in that** the cross-member (2.1) together with support elements (2.3, 2.4, 2.5, 2.6) forms a fastening frame (2) that is congruent with the frame support (3), wherein the intermediate spaces formed by the cross-member (2.1) and the support elements (2.3, 2.4, 2.5, 2.6) are closed by means of cover elements (2.7, 2.8) and/or the intermediate spaces formed by the frame elements (3.3, 3.4, 3.5, 3.6) and the transverse web (3.1) of the frame support (3) are closed by means of cover elements (2.70, 2.80), and the fastening frame (2) is connected to the frame support (3) in a force-fitting manner or is integral therewith.

## Revendications

1. Système de stockage (1) pour un véhicule destiné à stocker et à fournir un gaz sous pression comprenant :
- une première section d'accumulateurs tubulaires (1.1) avec plusieurs accumulateurs tubulaires (1.0) agencés longitudinalement parallèlement les uns aux autres en une première couche (L1) et au moins en une seconde couche (L2), qui sont en communication fluidique en forme de méandres au niveau de leurs extrémités axiales au moyen de boucles d'accumulateurs tubulaires (1.01, 1.02),
- au moins une seconde section d'accumulateurs tubulaires (1.2) avec plusieurs accumulateurs tubulaires (1.0) agencés longitudinalement parallèlement les uns aux autres en une première couche (L1) et au moins en une seconde couche (L2), qui sont en communication fluidique en forme de méandres au niveau de leurs extrémités axiales au moyen de boucles d'accumulateurs tubulaires (1.01, 1.02), et
- un moyen de connexion fluidique (1.12, 1.13) pour connecter fluidiquement les première et seconde sections d'accumulateurs tubulaires (1.1, 1.2),
**caractérisé en ce que**
- les moyens de connexion fluidique (1.12, 1.13) connectent fluidiquement chacune des mêmes extrémités axiales de soit deux accumulateurs tubulaires (1.0) adjacents sur un plan dans la première couche (L1) ou de deux accumulateurs tubulaires (1.0) adjacents sur un plan dans la seconde couche (L2), et
- un espace intermédiaire (Z1) est prévu entre les première et seconde sections d'accumulateurs tubulaires (1.1, 1.2) pour recevoir une poutre transversale (2.1) de la carrosserie du véhicule, qui est aligné avec la seconde couche (L2) d'accumulateurs tubulaires (1.0) lorsque le moyen de connexion fluidique (1.12, 1.13) est aligné avec la première couche (L1) des accumulateurs tubulaires (1.0), ou aligné avec la première couche (L1) des accumulateurs tubulaires (1.0) lorsque le moyen de connexion fluidique (1.12) est aligné avec la seconde couche (L2) des accumulateurs tubulaires (1.0).

2. Système de stockage (1) selon la revendication 1,
**caractérisé en ce que** le système de stockage (1) présente un support de cadre (3) encadrant la première section d'accumulateurs tubulaires (1.1) et la seconde section d'accumulateurs tubulaires (1.2).

3. Système de stockage (1) selon la revendication 2,
**caractérisé en ce que** le système de stockage (1) comprend une traverse (3.1) agencée entre les première et seconde sections d'accumulateurs tubulaires (1.1, 1.2), qui est alignée avec la première ou la seconde couche (L1, L2) avec laquelle le moyen de connexion fluidique (1.12) est également aligné, dans lequel le moyen de connexion fluidique (1.12) est guidé à travers la traverse (3.1) et la traverse (3.1) est connectée à force côté extrémité au support de cadre (3).

4. Système de stockage (1) selon l'une quelconque des revendications précédentes,
**caractérisé en ce que** le système de stockage (1) présente au moins un support de fixation en forme de tige (4.1) qui est guidé à travers les ouvertures (1.010) des boucles d'accumulateurs tubulaires (1.01) situées au niveau de la même extrémité axiale des accumulateurs tubulaires (1.0) et est connecté à force au support de cadre (3).

5. Système de stockage (1) selon l'une quelconque des revendications précédentes,
**caractérisé en ce que** le moyen de connexion fluidique (1.12, 1.13) est réalisé sous la forme d'un tuyau de raccordement (1.120, 1.130).

6. Système de stockage (1) selon l'une quelconque des revendications précédentes,
**caractérisé en ce que** le système de stockage (1) est réalisé avec une section intermédiaire d'accumulateurs tubulaires (1.10) agencée dans l'espace intermédiaire (Z1) avec plusieurs accumulateurs tubulaires (1.0) agencés longitudinalement parallèlement en au moins la première couche (L1), qui sont en communication fluidique en forme de méandres au niveau de leurs extrémités axiales au moyen de boucles d'accumulateurs tubulaires (1.01, 1.02), dans lequel
- le nombre de couches des accumulateurs tubulaires (1.0) de la section intermédiaire d'accumulateurs tubulaires (1.10) est inférieur d'au moins une couche par rapport au nombre de couches des accumulateurs tubulaires de la première et/ou de la seconde section d'accumulateurs tubulaires (1.1, 1.2), et
- le moyen de connexion fluidique (1.12) s'étendant dans la première couche (L1) des accumulateurs tubulaires (1.0) consiste en une première section de tuyau de raccordement (1.121) reliant fluidiquement les accumulateurs tubulaires (1.0) adjacents de la première section d'accumulateurs tubulaires (1.1) et de la section intermédiaire d'accumulateurs tubulaires (1.10) et en une seconde section de tuyau de raccordement (1.122) reliant fluidiquement les accumulateurs tubulaires (1.0) adjacents de la seconde section d'accumulateurs tubulaires (1.2) et de la section intermédiaire d'accumulateurs tubulaires (1.10).

7. Système de stockage selon la revendication 6,
**caractérisé en ce qu'**au moins une couche (L1) des accumulateurs tubulaires (1.0) de la section intermédiaire d'accumulateurs tubulaires (1.10) est réduite dans la direction longitudinale des accumulateurs tubulaires (1.0) par rapport aux accumulateurs tubulaires (1.0) de la première et/ou la seconde section d'accumulateurs tubulaires (1.1, 1.2).

8. Véhicule comprenant
- un système de stockage (1) selon l'une quelconque des revendications précédentes destiné à stocker et à fournir un gaz sous pression, comprenant une poutre transversale (2.1) qui est reliée à force à la carrosserie du véhicule,
dans lequel la poutre transversale (2.1) dans l'espace intermédiaire (Z1) entre les première et seconde sections d'accumulateurs tubulaires (1.1, 1.2) est soit alignée avec la seconde couche (L2) des accumulateurs tubulaires (1.0) lorsque le moyen de connexion fluidique (1.12) est aligné avec la première couche (L1) des accumulateurs tubulaires (1.0), ou alignée avec la première couche (L1) des accumulateurs tubulaires (1.0) lorsque le moyen de connexion fluidique (1.12) est aligné avec la seconde couche (L2) des accumulateurs tubulaires (1.0).

9. Véhicule selon la revendication 8,
**caractérisé en ce que** la poutre transversale (2.1) forme conjointement avec des éléments de support (2.3, 2.4, 2.5, 2.6) un cadre de fixation (2) congruent au support de cadre (3), dans lequel les espaces intermédiaires formés par la poutre transversale (2.1) et les éléments de support (2.3, 2.4, 2.5, 2.6) sont fermés au moyen d'éléments de couvercle (2.7, 2.8) et/ou les espaces intermédiaires formés par les éléments de cadre (3.3, 3.4, 3.5, 3.6) et la traverse (3.1) du support de cadre (3) sont fermés au moyen d'éléments de couvercle (2.70, 2.80) et le cadre de fixation (2) est relié à force au support de cadre (3) ou est fabriqué d'un seul tenant.
